# FASCICULE DE BREVET EUROPEEN

(11) **EP 2 470 399 B1**
(45) Date de publication et mention de la délivrance du brevet: **05.06.2013**
(21) Numéro de dépôt: 10745358.1
(22) Date de dépôt: 28.06.2010
(51) Int. Cl.: B60R 19/18

(54) **SUPPORT DE PARE-CHOC ET PARE-CHOC A DEFORMATIONS CONTROLEES**
STOSSSTANGENHALTERUNG UND STOSSSTANGE MIT KONTROLLIERTER VERFORMUNG
BUMPER SUPPORT AND BUMPER WITH CONTROLLED DEFORMATION

(30) Priorité: 26.08.2009 FR 0955823
(43) Date de publication de la demande: 04.07.2012
(73) Titulaire: Peugeot Citroën Automobiles SA, 78140 Vélizy-Villacoublay (FR)
(72) Inventeur: BENANE, Saïd, F-94550 Chevilly Larue (FR)
(74) Mandataire: Fernandez, Francis Lionel
(86) Numéro de dépôt international: PCT/FR2010/051343
(87) Numéro de publication internationale: WO 2011/023869

(56) Documents cités:
- EP-A1- 1 842 730
- EP-A1- 1 894 792
- US-A- 5 876 077
- US-A1- 2004 174 025
- US-B1- 6 406 081

## Description

La présente invention se rapporte à un support de pare-choc et à un pare-choc présentant une déformation contrôlée lors d'un choc.

Dans le domaine de la sécurité automobile qui concerne l'ensemble des moyens mis en oeuvre pour diminuer les conséquences d'un accident, les constructeurs d'automobiles doivent faire face à plusieurs préoccupations.

Ainsi, la première préoccupation des constructeurs consiste à assurer la protection des passagers du véhicule lors d'un choc, et en particulier lors de chocs subis à grandes vitesses, mais également consiste à limiter l'impact du véhicule vis-à-vis des autres usagers de la route, et notamment des piétons en permettant à la structure du véhicule de se déformer pour absorber l'énergie du choc.

Cependant, les chocs susceptibles d'être subis par un véhicule ne sont pas nécessairement des chocs subis à grandes vitesses. Il existe en effet de nombreuses situations dans lesquelles un véhicule peut subir des chocs à faible vitesse, encore appelés « chocs urbains ». On distingue en particulier deux types de chocs urbains : premièrement les chocs à très faibles vitesses, appelés « chocs parking », dans lesquels la vitesse à l'impact est de l'ordre de 2 à 4 kilomètres par heure ; deuxièmement les « chocs réparabilité » où la vitesse est de l'ordre de 16 kilomètres par heure. Le comportement d'un véhicule automobile subissant un des trois types de chocs (grandes vitesses, parking et réparabilité) est réglementé et testé à travers des procédures d'essais et de simulations de chocs répondant à des normes.

Certains tests consistent à soumettre un véhicule à une simulation de choc réparabilité pour estimer l'impact du choc sur les pièces constitutives du véhicule et les coûts de réparation induits. Un tel choc réparabilité est, par exemple, réalisé sous la forme d'un choc frontal du véhicule sur un mur rigide à une faible vitesse de l'ordre de 16 kilomètres par heure. L'objectif des constructeurs d'automobile est de réduire les coûts de réparation induits en minimisant le nombre de pièces à changer et le nombre d'heures de travail pour les changer.

De façon classique, un véhicule comporte un élément de carrosserie appelé doublure de panneau qui est fixé à la caisse par soudure. Sur cet élément de carrosserie est alors rapporté un support de pare-choc sur lequel est fixé le pare-choc destiné à absorber une partie de l'énergie dégagée lors d'un choc. Le support de pare-choc est généralement constitué d'une platine comportant une pluralité de lobes. Il a été constaté que le support de pare-choc classique présente souvent une grande rigidité induisant des déformations importantes de la doublure de panneau qui doit alors être souvent remplacée après un choc réparabilité. Une solution généralement retenue pour éviter le remplacement de la doublure de panneau est alors d'équiper le véhicule d'une doublure de panneau plus épaisse.

EP 1 842 730 divulgue un support de pare-choc selon le préambule de la revendication 1.

La présente insertion a pour objet de remédier en tout ou partie aux différents inconvénients cités précédemment.

Ce but est atteint, selon l'invention grâce à un support tel que défini dans la revendication 1.

La présente invention se rapporte également à un pare-choc de véhicule comprenant une peau de pare-choc fixée à un support de pare-choc selon l'invention.

Enfin, la présente invention concerne un véhicule équipé d'un pare-choc selon l'invention.

Il est entendu au sens de la présente invention, que les termes « inférieur » et « supérieur » se réfèrent à un axe vertical par rapport à un véhicule destiné à être équipé d'un support de pare-choc ou à un pare-choc selon l'invention. De même, dans la description qui suit les termes « longitudinal » et « transversal » se rapportent au référentiel véhicule où le terme « longitudinal » caractérise une direction sensiblement orientée suivant la longueur du véhicule et où « transversal » caractérise une direction sensiblement orientée suivant sa largeur.

Ainsi, un support de pare-choc selon l'invention, en situation sur un véhicule, permet de minimiser ou d'éviter la transmission d'un effort lors d'un choc réparabilité à la doublure de panneau du véhicule par la déformation de la partie inférieure et éventuellement suivie, suivant la violence du choc, par la déformation de la partie supérieure. Les déformations successives des parties inférieure puis supérieure permettent de protéger la doublure de panneau. L'orientation des parties supérieure et inférieure permet d'induire une déformation de chaque caisson d'écrasement selon un axe de déformation sensiblement vertical par rapport au véhicule : une telle déformation permet de minimiser l'avancée vers le centre du véhicule des éléments de carrosserie impactés lors du choc et permet d'absorber une plus grande énergie que si la déformation de chaque caisson d'écrasement s'effectuait selon un axe longitudinal par rapport au véhicule.

Par ailleurs, le support de pare-choc selon l'invention présente un comportement adapté lors d'un choc parking : en effet, en ne se déformant pas sous l'effet d'un effort inférieur au premier effort seuil, la partie inférieure confère au pare-choc selon l'invention une rigidité suffisante pour résister à un choc parking.

Enfin, les déformations contrôlées et successives d'un support de pare-choc selon l'invention permettent d'absorber une quantité d'énergie importante lors d'un choc et renforcent la protection de la doublure de panneau d'un véhicule selon l'invention : cela autorise le fabricant du véhicule selon l'invention à réduire l'épaisseur de la doublure de panneau pour alléger la masse totale du véhicule selon l'invention.

Dans un mode de réalisation de l'invention, la partie inférieure offre une résistance moindre à la déformation que la partie supérieure. Ainsi, la déformation de chaque caisson d'écrasement s'effectue suivant une direction privilégiée vers le bas du véhicule.

Dans un mode de réalisation de l'invention, chaque caisson d'écrasement comporte au moins un orifice délimité par un flanc supérieur et un flanc inférieur, le flanc supérieur présentant une largeur supérieure à celle du flanc inférieur, les flancs supérieur et inférieur étant constitutifs respectivement des parties supérieure et inférieure. Un support de pare-choc avec un tel orifice est simple à fabriquer et permet d'alléger la masse du support de pare-choc selon l'invention.

Selon une caractéristique de l'invention, les flancs supérieur et inférieur sont disposés sur les faces latérales s'étendant perpendiculairement à l'axe de déformation de chaque caisson d'écrasement.

Dans un mode de réalisation de l'invention, chaque caisson d'écrasement présente une paroi frontale opposée à ladite platine, la paroi frontale étant inclinée par rapport à ladite platine. Ainsi, l'inclinaison peut être choisie de manière à ce que, lors d'un choc réparabilité, la partie inférieure est amenée en contact avec le mur utilisé pendant le test avant que la partie supérieure ne soit impactée par le mur.

Selon une caractéristique de l'invention, chaque caisson d'écrasement présente une forme sensiblement de tronc de pyramide. Une forme de tronc de pyramide permet une mise sous contrainte progressive du caisson d'écrasement pour absorber une plus grande quantité de l'énergie engendrée par un choc.

Dans un mode de réalisation de l'invention, la platine présente au moins une pente et/ou un embouti. Une telle pente ou un tel embouti permet de mieux répartir l'énergie d'un choc sur l'ensemble de la platine du support de pare-choc.

Dans un mode de réalisation de l'invention, chaque caisson d'écrasement présente en outre des trous destinés à alléger ledit support.

L'invention sera mieux comprise à l'aide de la description détaillée qui est exposée ci-dessous en regard des dessins annexés dans lesquels :
La Figure 1a est une vue schématique partielle et en perspective d'un support de pare-choc installé sur un véhicule selon la présente invention ;
la Figure 1b est une vue schématique partielle en perspective et de dessous du support de pare-choc représenté sur la Figure 1 a ;
la Figure 1c est une autre vue schématique partielle en perspective et de dessous du support de pare-choc représenté sur la Figure 1a ;
la Figure 2a est une vue schématique partielle de coté d'un véhicule selon l'invention allant percuter un mur ;
La Figure 2b est une vue schématique partielle en perspective du véhicule représenté à la Figure 2a avec la partie inférieure en cours de déformation ;
La Figure 2c est une vue schématique partielle en perspective du véhicule représenté à la Figure 2a avec les parties inférieure et supérieure en cours de déformation.

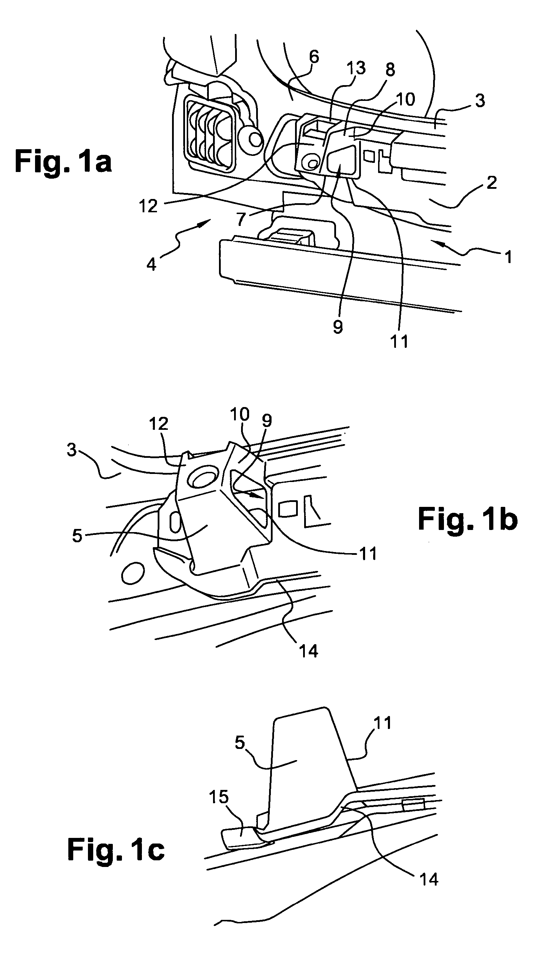

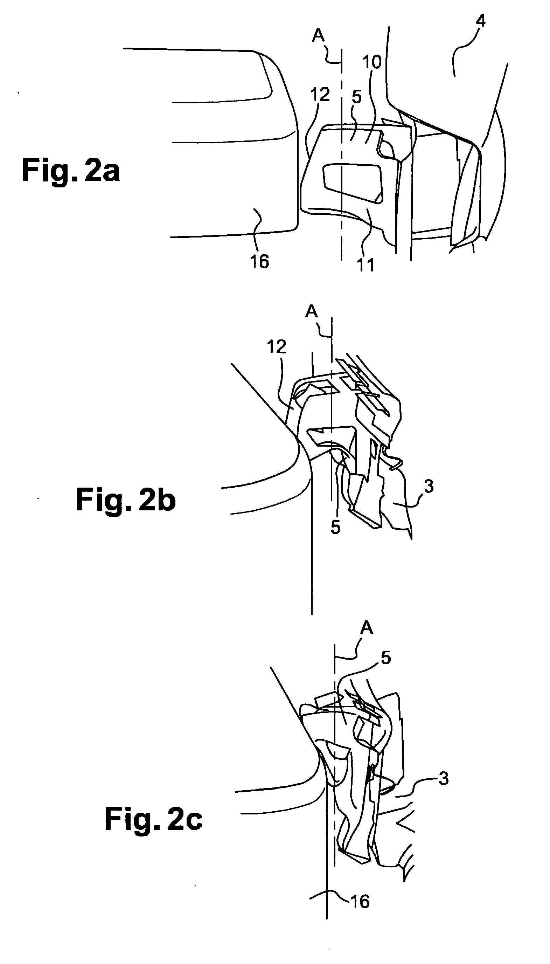

Le support de pare-choc 1, représenté sur les Figures 1a à 1c comporte une platine 2 pour la fixation dudit support sur la caisse 3 d'un véhicule 4. Une pluralité de caissons d'écrasement 5 font saillie de la platine 2, présentent une forme sensiblement de tronc de pyramide. Ils sont conçus pour se déformer lors d'un choc. Le support de pare-choc 1 est rapporté sur une doublure de panneau 6 constitutive de la caisse 3. Chaque caisson d'écrasement 5 comporte une partie inférieure 7 conçue pour se déformer sous l'effet d'un premier effort seuil transmis audit support lors d'un choc. Chaque caisson d'écrasement 5 comporte également une partie supérieure 8 conçue pour se déformer sous l'effet d'un deuxième effort seuil transmis audit support lors d'un choc, lesdits premier et deuxième efforts seuil étant différents. Les parties inférieure et supérieure 7, 8 sont orientées pour induire une déformation de chaque caisson d'écrasement 5 suivant un axe de déformation A, représenté sur les Figures 2a à 2c, vertical par rapport au véhicule 4. De préférence, les parties inférieure et supérieure 7, 8 sont conçues de manière à ce que ledit deuxième effort seuil soit supérieur audit premier effort seuil.

Un pare-choc selon l'invention, non représenté sur les Figures, peut être réalisé en fixant une peau de pare-choc sur un support de pare-choc 1 selon l'invention. Dans la suite de la description, et pour faciliter la visualisation des déformations subies par le support de pare-choc 1, et donc le pare-choc selon l'invention, la peau de pare-choc est omise sur les Figures.

Sur le support de pare-choc 1 représenté sur les Figures 1a à 1c, chaque caisson d'écrasement 5 comporte au moins un orifice 9 délimité par un flanc supérieur 10 et un flanc inférieur 11, le flanc supérieur 10 ayant une largeur supérieure à celle du flanc inférieur 11. Les flancs supérieur et inférieure 10, 11 sont respectivement constitutifs des parties supérieure et inférieure 7, 8. La Figure 1b montre que les flancs supérieur et inférieur 10, 11 sont situés sur les faces latérales de chaque caisson d'écrasement 5.

Chaque caisson d'écrasement 5 comporte en outre une paroi frontale 12 opposée à ladite platine 2 et inclinée par rapport à la platine 2. La paroi frontale 12 prolonge ainsi les flancs supérieur et inférieur 10, 11. L'inclinaison de la paroi frontale 12 est particulièrement visible sur la Figure 1 c et la Figure 2a. Cette inclinaison est choisie de manière à ce que la partie inférieure 7 vienne en contact avec un mur vertical 16 avant la partie supérieure 8 lors d'un choc réparabilité, comme cela est représenté sur la Figure 2a.

Afin d'alléger la structure du support de pare-choc 1 selon l'invention, des trous 13 peuvent être ménagés dans les caissons d'écrasement 5.

Par ailleurs, la forme de la platine 2 peut être adaptée à la forme de la doublure de panneau 3 et présenter à cet effet au moins une pente 14 ou un embouti 15. Une telle pente permet également de garantir un bon appui du support de pare-choc 1 sur la doublure de panneau 3.

Les Figures 2a à 2c montrent la manière dont le support de pare-choc 1 selon l'invention se déforme lorsque le véhicule 4 qu'il équipe est soumis à un choc réparabilité : le véhicule 4 est projeté contre un mur vertical 16 à une vitesse déterminée, représentative d'un choc réparabilité comme expliqué ci-dessus. La paroi frontale 12 du caisson d'écrasement 5, du fait de son inclinaison, percute le mur vertical 16 dans sa partie basse où ladite paroi frontale 12 est prolongée par le flanc inférieur 11. Ainsi, lors du choc, si l'effort engendré est supérieur au premier effort seuil, le flanc inférieur 11 se déforme comme l'illustre la Figure 2b. Une partie de l'énergie du choc est alors absorbée par cette déformation tandis que le flanc supérieur 10 et la platine 2 ne sont pas déformés.

Lorsque l'effort engendré par le choc est supérieur au deuxième effort seuil, le flanc supérieur 10 vient en contact avec le mur vertical 16 et commence à subir une déformation de manière à ce que le caisson d'écrasement 5 subisse un déplacement sensiblement vers le bas (Figure 2c). Cette déformation absorbe une partie importante de l'énergie engendrée par le choc. Par exemple, le flanc supérieur 10 est conçu pour absorber par déformation une énergie de l'ordre de 200 joules.

Ainsi, un support de pare-choc 1 selon l'invention décrit ci-dessus permet de réaliser un pare-choc selon l'invention apte à subir des déformations contrôlées qui limite les déformations induites par un choc réparabilité à une doublure de panneau 3 d'un véhicule 4 selon l'invention.

Les déformations contrôlées et successives du support de pare-choc 1 autorisent le fabricant du véhicule 4 à réduire l'épaisseur de la doublure de panneau 3 pour alléger la masse totale du véhicule 4.

Bien entendu, les exemples de réalisations évoqués ci-dessus ne présentent aucun caractère limitatif et d'autres détails et améliorations peuvent être apportés au support de pare-choc 1 selon l'invention, sans pour autant sortir du cadre de l'invention où d'autres formes de support de pare-choc peuvent être réalisées.

## Revendications

1. Support de pare-choc (1), destiné à équiper un véhicule (4), comportant une platine (2) pour la fixation dudit support sur la caisse (3) du véhicule (4), une pluralité de caissons d' écrasement (5) faisant saillie de ladite platine (2). Au moins un caisson d'écrasement (5) comportant au moins une partie inférieure (7) et une partie supérieure (8) conçues pour se déformer respectivement sous l'effet d'un premier effort seuil et d'un deuxième effort seuil prédéterminés transmis audit support, **caractérisé en ce que** la partie inférieure (7) offre une résistance moindre à la déformation que la partie supérieure (8), ledit premier effort seuil étant différent dudit deuxième effort seuil, lesdites parties supérieure et inférieure (7, 8) étant orientées pour induire une déformation de chaque caisson d'écrasement (5) suivant un axe de déformation sensiblement vertical par rapport au véhicule (4).

2. Support de pare-choc (1) selon la revendication 1, dans lequel chaque caisson d'écrasement comporte au moins un orifice (9) délimité par un flanc supérieur (10) et un flanc inférieur (11), le flanc supérieur (10) présentant une largeur supérieure à celle du flanc inférieur (11), les flancs supérieur et inférieur (10, 11) étant constitutifs respectivement des parties supérieure et inférieure (7, 8).

3. Support de pare-choc (1) selon la revendication 2, dans lequel les flancs supérieur et inférieur (10, 11) sont disposés sur les faces latérales s'étendant perpendiculairement à l'axe de déformation de chaque caisson d'écrasement (5).

4. Support de pare-choc (1) selon l'une des revendications 1 à 3, dans lequel chaque caisson d'écrasement (5) présente une paroi frontale (12) opposée à ladite platine (2), la paroi frontale (12) étant inclinée par rapport à ladite platine (2).

5. Support de pare-choc (1) selon l'une des revendications 1 à 4, dans lequel chaque caisson d'écrasement (5) présente une forme sensiblement de tronc de pyramide.

6. Support de pare-choc (1) selon l'une des revendications 1 à 5, dans lequel la platine (2) présente au moins une pente (14) et/ou un embouti (15).

7. Support de pare-choc (1) selon l'une des revendications 1 à 6, dans lequel chaque caisson d'écrasement (5) présente en outre des trous (13) destinés à alléger ledit support.

8. Pare-choc de véhicule comprenant une peau de pare-choc fixée à un support de pare-choc (1) selon l'une des revendications 1 à 7.

9. Véhicule équipé d'un pare-choc selon la revendication 8.

## Patentansprüche

1. Stoßfängerhalterung (1), die zur Ausstattung eines Fahrzeugs (4) bestimmt ist, umfassend eine Platine (2) zur Befestigung der besagten Halterung an der Karosserie (3) des Fahrzeugs (4), eine Vielzahl von Quetschdosen (5), die über die besagte Platine (2) überstehen, wobei zumindest eine der Quetschdosen (5) zumindest einen unteren Abschnitt (7) und einen oberen Abschnitt (8) umfasst, die so gestaltet sind, dass sie sich jeweils unter dem Einfluss einer ersten und einer zweiten vorbestimmten grenzwertigen Kraft verformen, die auf die besagte Halterung übertragen werden, **dadurch gekennzeichnet, dass** der untere Abschnitt (7) einen geringeren Verformungswiderstand aufweist, als der obere Abschnitt (8) und sich die erste grenzwertige Kraft von der zweiten grenzwertigen Kraft unterscheidet, und der besagte obere und untere Abschnitt (7, 8) ausgerichtet sind, um eine Verformung jeder Quetschdose (5) gemäß einer Verformungsachse zu bewirken, die in etwa senkrecht zum Fahrzeug (4) verläuft.

2. Stoßfängerhalterung (1) nach Anspruch 1, bei der jede Quetschdose zumindest eine Öffnung (9) umfasst, die durch eine obere Flanke (10) und eine untere Flanke (11) begrenzt wird, und die obere Flanke (10) breiter ist, als die untere Flanke (11), und die obere und die untere Flanke (10, 11) jeweils den oberen und unteren Abschnitt (7, 8) bilden.

3. Stoßfängerhalterung (1) nach Anspruch 2, bei der die obere und die untere Flanke (10, 11) an den Seitenflächen angeordnet sind, die sich senkrecht zur Verformungsachse jeder Quetschdose (5) erstrecken.

4. Stoßfängerhalterung (1) nach einem der Ansprüche 1 bis 3, bei der jede Quetschdose (5) eine Stirnwand (12) aufweist, die gegenüber der besagten Platine (2) liegt, und die Stirnwand (12) im Verhältnis zur besagten Platine (2) geneigt ist.

5. Stoßfängerhalterung (1) nach einem der Ansprüche 1 bis 4, bei der jede Quetschdose (5) eine Form aufweist, die in etwa jener eines Pyramidenstumpfes entspricht.

6. Stoßfängerhalterung (1) nach einem der Ansprüche 1 bis 5, bei der die Platine (2) zumindest einen geneigten (14) und/ oder einen tiefgezogenen Abschnitt (15) aufweist.

7. Stoßfängerhalterung (1) nach einem der Ansprüche 1 bis 6, bei der jede Quetschdose (5) darüber hinaus Löcher (13) aufweist, die dazu bestimmt sind, die besagte Halterung leichter zu machen.

8. Fahrzeugstoßfänger umfassend eine Stoßfängerhülle, die auf einer Stoßfängerhalterung (1) nach einem der Ansprüche 1 bis 7 befestigt ist.

9. Fahrzeug, das mit einem Stoßfänger nach Anspruch 8 ausgestattet ist.

## Claims

1. Bumper mounting (1), intended to be fitted on a vehicle (4), comprising a plate (2) for the attaching of said mounting onto the body shell (3) of the vehicle (4), a plurality of crash shells (5) projecting from said plate (2), at least one crash shell (5) comprising at least one lower portion (7) and one upper portion (8) designed to be respectively deformed under the effect of a first predetermined threshold force and of a second predetermined threshold force transmitted to said mounting, **characterised in that** the lower portion (7) offers less resistance to the deformation than the upper portion (8), said first threshold force being different from said second threshold force, said upper and lower portions (7, 8) being oriented so as to induce a deformation of each crash shell (5) along a substantially vertical deformation axis relative to the vehicle (4).

2. Bumper mounting (1) according to claim 1, wherein each crash shell comprises at least one orifice (9) delimited by an upper flank (10) and a lower flank (11), with the upper flank (10) having a width greater than that of the lower flank (11), with the upper and lower flanks (10, 11) constituting respectively upper and lower portions (7, 8).

3. Bumper mounting (1) according to claim 2, wherein the upper and lower flanks (10, 11) are arranged on the lateral surfaces extending perpendicularly to the deformation axis of each crash shell (5).

4. Bumper mounting (1) according to one of claims 1 to 3, wherein each crash shells (5) has a front wall (12) opposite said plate (2), with the front wall (12) being inclined in relation to said plate (2).

5. Bumper mounting (1) according to one of claims 1 to 4, wherein each crash shell (5) substantially has the shape of a truncated pyramid.

6. Bumper mounting (1) according to one of claims 1 to 5, wherein the plate (2) has at least one slope (14) and/or sleeve (15).

7. Bumper mounting (1) according to one of claims 1 to 6, wherein each crash shell (5) further has holes (13) intended to lighten said mounting.

8. Vehicle bumper comprising a bumper skin attached to a bumper mounting (1) according to one of claims 1 to 7.

9. Vehicle provided with a bumper according to claim 8.
